# FASCICULE DE BREVET EUROPEEN

(11) **EP 1 076 624 B1**
(45) Date de publication et mention de la délivrance du brevet: **31.05.2006**
(21) Numéro de dépôt: 99915432.1
(22) Date de dépôt: 27.04.1999
(51) Int. Cl.: B62M 23/02, B62M 25/08

(54) **DISPOSITIF DE COMMANDE POUR VEHICULE ELECTRIQUE**
STEUERUNGSVORRICHTUNG FÜR ELEKTROFAHRZEUGE
ELECTRIC VEHICLE CONTROL DEVICE

(30) Priorité: 04.05.1998 FR 9805770
(43) Date de publication de la demande: 21.02.2001
(73) Titulaire: Ecole d'Ingenieurs du Canton de Neuchatel-ETS, 2400 Le Locle (CH)
(72) Inventeur: PARRAT, Roger, CH-2023 Gorgier (CH); KARMOUS, Mohamed, CH-2400 Le Locle (CH)
(74) Mandataire: GLN
(86) Numéro de dépôt international: PCT/CH1999/000169
(87) Numéro de publication internationale: WO 1999/057005

(56) Documents cités:
- GB-A- 2 298 964
- US-A- 3 921 741
- US-A- 4 095 663

## Description

La présente invention se rapporte à un dispositif de commande pour un véhicule électrique de type comportant au moins deux roues, un système d'entraînement mécanique pour permettre à l'utilisateur de fournir une énergie musculaire, une source d'énergie électrique et un transducteur électromécanique relié électriquement à la source d'énergie électrique et mécaniquement à l'une des roues, le transducteur servant à transformer l'énergie mécanique provenant de la roue en énergie électrique alimentant la source et l'énergie électrique provenant de la source en énergie mécanique alimentant la roue.

Le dispositif de commande selon l'invention comprend un module de commande, une électronique de puissance, pour assurer la transmission d'énergie entre la source et le transducteur, commandée par le module de commande, un frein pour réduire la vitesse du véhicule, une interface homme-machine reliée au module et comportant des moyens pour commander la distribution de l'énergie délivrée par la source d'énergie électrique au transducteur, et des capteurs destinés à mesurer des paramètres relatifs au fonctionnement du véhicule et reliés au module de commande.

La demande de brevet français 2 413 254 décrit un vélo présentant ces caractéristiques. Il est muni d'une source d'énergie électrique et d'un circuit de commande agencé pour que la vitesse reste constante, quel que soit l'effort fourni par le cycliste. Il est ainsi proposé que la source d'énergie apporte un appoint tant que la vitesse est inférieure à une vitesse limite, alors que de l'énergie mécanique est transformée en énergie électrique par le transducteur lorsque ce seuil est dépassé. On peut modifier celui-ci par le choix d'une résistance parmi plusieurs branchées dans le circuit de commande et définissant différentes vitesses. Une telle solution manque cependant de souplesse, car l'utilisateur est pratiquement obligé de circuler à l'une des vitesses imposées par le circuit de commande.

Un autre vélo électrique est décrit dans le brevet US 3 921 741. II comporte un moteur et une génératrice, tous deux reliés mécaniquement à l'une des roues et électriquement à la source d'énergie, ainsi qu'une manette de commande agissant sur un rhéostat relié au circuit de commande. Ce dernier permet de faire varier la quantité d'énergie délivrée par la source d'énergie électrique au moteur ou la quantité d'énergie mécanique transformée par la génératrice pour être stockée dans la source d'énergie électrique, en fonction de la position de la manette.

De manière plus précise, l'utilisateur peut maintenir la manette en position médiane pour laquelle la source d'énergie électrique n'est pas sollicitée. Le déplacement de la manette dans un sens permet d'amener le rhéostat dans une position telle que la source d'énergie électrique alimente le moteur et participe ainsi à faire avancer le vélo. Plus la manette est déplacée dans ce sens, plus le courant délivré est important. En déplaçant la manette dans l'autre sens, l'utilisateur relie la génératrice à la source d'énergie électrique de manière que le signal électrique engendré aux bornes de la génératrice par le déplacement du vélo assure la charge de la source.

De la sorte, l'utilisateur peut régler la quantité d'énergie prélevée de - ou fournie à - la source d'énergie. Une telle solution permet au cycliste une plus grande souplesse d'utilisation que celle du système selon le brevet français mentionné ci-dessus. Celle-ci est toutefois très limitée. A chaque fois que la pente varie, il est, en effet, nécessaire d'adapter la quantité d'énergie délivrée.

Il est aussi connu, par le document EP 0 590 674, de réaliser un véhicule dans lequel l'énergie dispensée par la source d'énergie est proportionnelle à la force appliquée sur les pédales, le coefficient de proportionnalité variant en fonction de la vitesse. Dans un tel véhicule, il n'est pas possible de laisser le véhicule fournir seul l'énergie, ni de maîtriser la vitesse en descente, en réglant le prélèvement d'énergie.

Ainsi qu'il ressort de ce qui précède, il a déjà été proposé de réaliser des vélos électriques dans lesquels la source d'énergie électrique a une fonction d'appoint. Ces vélos sont commandés selon différents modes, pour doser la fourniture d'énergie. Toutefois, et de manière surprenante, les vélos ne comportent qu'un mode de commande.

Un but de la présente invention est de donner à l'utilisateur de tels véhicules la possibilité de choisir les paramètres de référence relatifs à la fourniture ou au prélèvement d'énergie d'appoint et d'offrir ainsi plusieurs alternatives, selon qu'il souhaite fournir un effort régulier ou avancer à une vitesse constante, par exemple. A cet effet, le dispositif de commande selon l'invention est caractérisé en ce que l'interface comporte, en outre, un sélecteur de mode pour choisir l'un ou l'autre parmi une pluralité de modes de commande, chaque mode définissant, en fonction de l'un au moins des paramètres, la quantité d'énergie transmise entre le transducteur et la source, par l'intermédiaire de l'électronique de puissance et à partir des ordres donnés par le module de commande.

La présente invention a en particulier pour but d'offrir à l'utilisateur des moyens simples et facilement manipulables pour assurer la commande du dispositif. Ce but est atteint grâce au fait que les moyens pour commander la distribution d'énergie sont formés d'une manette et que le sélecteur de mode consiste en un levier pouvant occuper autant de positions que le dispositif comporte de modes de commande.

De manière avantageuse, le module de commande du dispositif selon l'invention est agencé de manière que, selon la position du levier, l'énergie électrique fournie au transducteur assure respectivement une vitesse et/ou un couple fonction de la position de la manette.

Un autre but de la présente invention est de garantir une sécurité optimale de circulation. A cet effet et dans un mode particulier de réalisation, le dispositif est agencé de manière que l'apport d'énergie électrique au transducteur soit interrompu lorsque la vitesse dépasse une valeur limite.

Dans les véhicules conventionnels, l'énergie de freinage est totalement perdue. La présente invention a également pour but d'assurer une récupération d'énergie optimale. Le dispositif permettant d'atteindre ce but est caractérisé en ce que le frein comporte un organe d'activation et un frein électrique activé par l'organe et relié au module de commande, lequel est agencé de manière qu'il fasse fonctionner le transducteur comme génératrice lorsqu'on active le frein.

L'utilisation d'un véhicule est plus agréable lorsqu'on connaît les paramètres relatifs à son fonctionnement. Dans ce but, le dispositif selon l'invention comporte, en outre, un dispositif d'affichage pour indiquer à l'utilisateur les informations relatives au fonctionnement du véhicule et du dispositif de commande.

D'autres avantages et caractéristiques de l'invention apparaîtront à la lecture de la description détaillée suivante d'un exemple de réalisation, donné à titre illustratif et non limitatif en liaison avec le dessin annexé dans lequel :
- La figure 1 montre un vélo muni d'un dispositif de commande selon l'invention ;
- la figure 2 représente un schéma-bloc du dispositif selon l'invention ; et
- les figures 3 et 4 représentent les performances d'un véhicule muni d'un dispositif selon l'invention pour un même profil type de route donné et pour deux modes de commande.

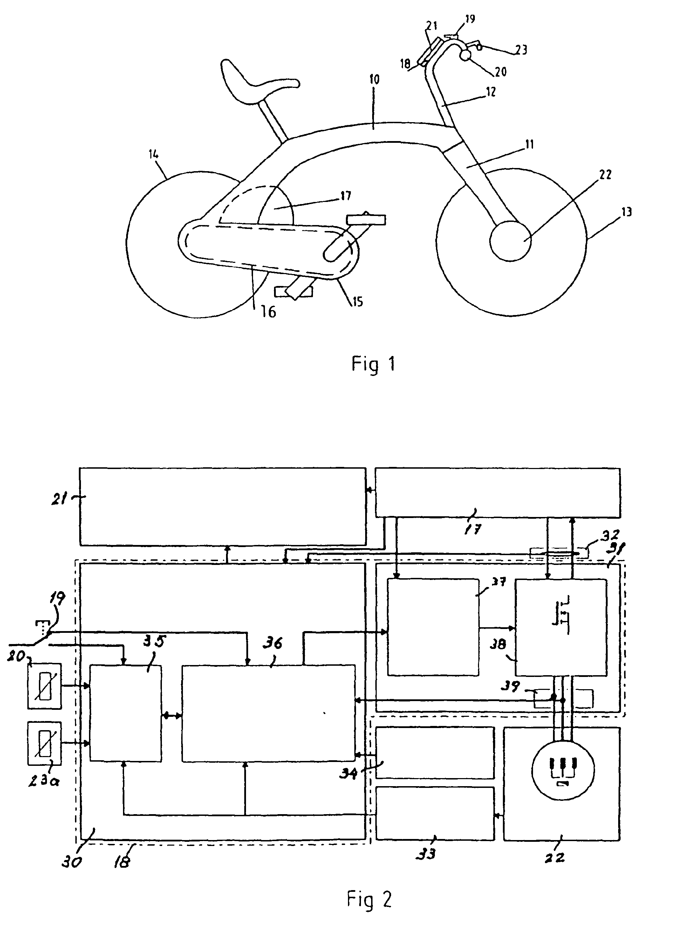

Le vélo représenté à la figure 1 comporte, de manière classique, un cadre 10, une fourche avant 11, un guidon 12 et une roue avant 13. Il comporte, en outre, une roue arrière 14, un pédalier 15 et une chaîne 16 pour relier le pédalier 15 à la roue arrière 14. Une source d'énergie électrique 17 est fixée sur le cadre 10.

Un boîtier électronique 18, monté sur le guidon 12, contient différents composants électroniques dont les spécificités seront précisées en regard de la figure 2. Il est commandé par un levier 19, une manette 20, ainsi qu'une poignée de freins 23, tous montés sur le guidon 12. Un dispositif d'affichage 21 est disposé sur le boîtier 18.

Le levier 19 permet de sélectionner deux modes distincts de fonctionnement du dispositif, à savoir un mode à vitesse constante et un mode à couple constant. La manette 20 définit, par sa position, la valeur du paramètre correspondant au mode sélectionné, la vitesse et le couple en l'occurrence. La poignée de frein 23 commande un frein électrique 23a, schématiquement représenté à la figure 2, et un frein mécanique conventionnel, non représenté au dessin.

Un transducteur électromécanique 22 est associé à l'essieu et au moyeu de la roue avant 13 et relié au boîtier de commande 18. Ce transducteur est de type "brushless" triphasé, commandé par un signal alternatif, avec des aimants montés sur le moyeu, formant un rotor et des bobines solidaires de l'essieu, formant un stator. Il est dimensionné de manière que le nombre d'alternances du signal de commande nécessaire pour le faire tourner d'un tour soit compris entre 30 et 60 environ.

Un tel transducteur peut jouer à la fois le rôle de moteur et de génératrice, selon les ordres donnés par le boîtier de commande 18. Il permet d'entraîner le vélo sans système de réduction, d'où un rendement particulièrement bon. Comme les bobines sont fixes, il n'est pas nécessaire de disposer de balais. En conséquence, son entretien est particulièrement simple.

Le dispositif de commande, schématiquement représenté à la figure 2, est formé du boîtier de commande 18, d'un ampèremètre 32, d'un capteur magnétique 33 et d'un dynamomètre 34 ainsi que du levier 19, de la manette 20 et du frein électrique 23a. Le dispositif d'affichage 21, la source d'énergie électrique 17 et le transducteur 22 sont également représentés sur la figure 2.

Le boîtier de commande 18 est formé d'un module de commande et de mesure 30 et d'une électronique de puissance 31.

Le module 30 est avantageusement réalisé au moyen d'un microprogrammateur, par exemple celui vendu par la maison Siemens (DE) sous la référence 80C537. Il comporte une unité de gestion 35 et une unité de calcul 36.

L'unité de gestion 35 est reliée au levier 19, schématiquement représenté par un sélecteur, ainsi qu'à la manette 20 et au frein électrique 23a, tous deux représentés par un rhéostat. Elle reçoit également des informations fournies par l'unité de calcul 36 et lui adresse des ordres.

L'unité de calcul 36 reçoit des signaux de commande de l'unité de gestion 35, de l'électronique de puissance 31, de l'ampèremètre 32, du capteur magnétique 33 et du dynamomètre 34. Elle envoie des ordres à l'électronique de puissance 31 pour définir si le transducteur 22 doit travailler en moteur ou en génératrice et quelle doit être la densité du courant prélevé ou délivré.

L'électronique de puissance 31 comporte un circuit de mise en forme 37, un pont triphasé 38 et un ampèremètre 39. Le circuit de mise en forme 37 reçoit des ordres de l'unité de gestion 35 et les transmet, après mise en forme, au pont triphasé 38. Ce dernier est relié au transducteur 22 pour en assurer l'alimentation lorsqu'il travaille en moteur et pour redresser le signal en vue de charger la source d'énergie 17 lorsque le transducteur 22 travaille en génératrice.

L'ampèremètre 39 mesure le courant de charge ou de décharge passant entre le pont triphasé 38 et le transducteur 22.

Le capteur magnétique 33 est monté sur le stator du transducteur 22, au voisinage du rotor. Il adresse un signal à l'unité de calcul 36 à chaque fois qu'un pôle du rotor passe à son voisinage. L'unité 36 détermine le nombre de signaux reçus par unité de temps. Elle calcule ensuite la vitesse du véhicule en fonction du diamètre de la roue. La connaissance de cette valeur permet à l'unité de calcul 36 et à l'unité de gestion 35 de définir les conditions d'alimentation du transducteur 22 lorsqu'il fonctionne en moteur.

Le dynamomètre 34 est associé au pédalier 15 pour mesurer le couple musculaire fourni par l'utilisateur.

L'ampèremètre 32, intercalé entre la source d'énergie 17 et l'électronique de puissance 31, permet de mesurer la charge et la décharge de la source d'énergie 17 et, en conséquence, de définir les ressources disponibles, en vue de les indiquer sur le dispositif d'affichage 21.

Comme déjà mentionné, le dispositif de commande ainsi décrit permet à l'utilisateur de sélectionner le mode de commande grâce au levier 19. Pour l'une des positions de celui-ci, le vélo roule à vitesse constante et, dans l'autre, à couple constant. L'utilisateur doit encore définir, au moyen de la manette 20, la valeur du paramètre constant correspondant au mode choisi, en l'occurrence la vitesse à laquelle il souhaite se déplacer ou le couple à appliquer sur la roue motrice.

Lorsque le levier 19 sélectionne le mode à vitesse constante, l'utilisateur doit enfin définir, au moyen de la manette 20, la vitesse à laquelle il souhaite se déplacer. Le dispositif de commande fonctionne alors comme suit.

L'unité de gestion 35 donne l'ordre à l'unité de calcul 36 de lui fournir les informations relatives à la vitesse du véhicule. A cet effet, l'unité 36 interroge le capteur magnétique 33 et calcule la vitesse.

L'unité de gestion 35 compare alors la vitesse ainsi calculée avec la vitesse définie par la position de la manette 20. Si la vitesse du véhicule est plus faible que celle souhaitée, l'unité 35 donne l'ordre au circuit de mise en forme 37 d'alimenter le transducteur 22. Le courant appliqué peut être soit constant, soit dosé de manière progressive en le réduisant au fur et à mesure que la différence diminue.

Si la vitesse du véhicule est supérieure à celle souhaitée, l'unité de gestion 35 donne l'ordre au circuit de mise en forme 37 de prélever de l'énergie sur le transducteur 22. En d'autres termes, ce dernier travaille comme génératrice. Là aussi, l'énergie prélevée est soit constante, soit fonction de la différence entre les vitesses. Dans ce dernier cas, on évite des à-coups dans le fonctionnement du véhicule.

L'utilisateur peut, bien entendu, modifier la vitesse du véhicule tout en se déplaçant, grâce à une rotation de la manette 20. L'unité de gestion 35 traite alors les informations reçues sur cette nouvelle base, donnant l'ordre au transducteur 22 de travailler soit en moteur, soit en génératrice, selon que la vitesse du véhicule est supérieure ou inférieure à la vitesse souhaitée.

Si un obstacle se présente en cours de route, l'utilisateur actionne la poignée de frein 23 et entraîne, dans un premier temps, le rhéostat du frein électrique 23a. L'unité de gestion 35 reçoit cette information comme annulant l'ordre relatif à la vitesse constante et donne immédiatement au circuit de mise en forme 37 l'ordre de faire travailler le transducteur 22 comme génératrice, en fonction de la position de la poignée de frein 23, tant qu'elle est actionnée.

L'énergie prélevée pour assurer le freinage électrique est ainsi d'autant plus importante que la pression appliquée sur la poignée de frein 23 est grande. Au-delà d'une certaine limite, correspondant à environ 60% de la course de la poignée 23, le frein mécanique est également entraîné et agit en complément au frein électrique. Il en résulte certes une perte de rendement. Cette solution est toutefois indispensable pour des raisons de sécurité, au cas où le circuit électrique d'alimentation serait rompu.

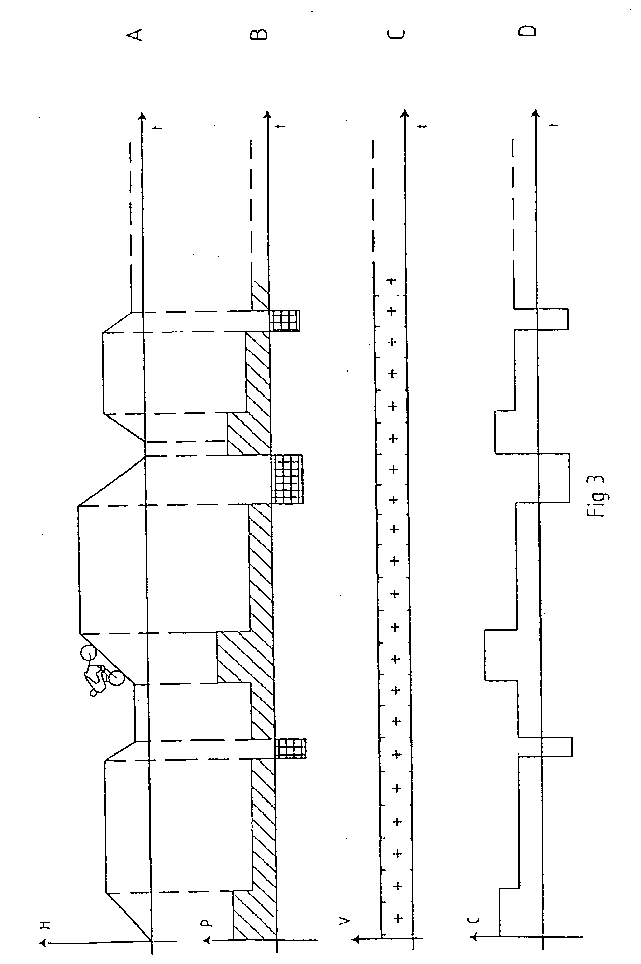

Les performances obtenues dans ce mode de fonctionnement seront précisées en référence à la figure 3.

Lorsque l'utilisateur a sélectionné le mode à couple constant au moyen du levier 19, le dispositif selon l'invention fonctionne comme suit.

La position de la manette 20 définit le niveau du couple qui doit être appliqué au véhicule. L'unité de calcul 36 prend en compte les informations reçues de l'ampèremètre 32, du capteur magnétique 33 et du dynamomètre 34 pour calculer les couples électrique et mécanique respectivement appliqués au véhicule par le transducteur 22 et par le pédalier 15. Il détermine plus précisément le couple généré par le transducteur 22 à partir du courant mesuré par l'ampèremètre 32 et de la vitesse définie à partir des informations données par le capteur magnétique 33. Le couple musculaire est défini en fonction de la force mesurée par le dynamomètre 34 et du bras de levier du pédalier 15.

Dans ce mode de commande, le couple appliqué sera le même, quel que soit le profil du terrain, tant, bien sûr, que la position de la manette 20 n'est pas modifiée.

L'unité de calcul 36 définit donc en permanence le couple moteur. Si celui-ci est inférieur au couple souhaité, correspondant à la position de la manette 20, il en informe l'unité de gestion 35 qui donne alors l'ordre au circuit de mise en forme 37 d'augmenter l'énergie fournie par la source 17. Si au contraire, le couple mesuré dépasse le couple souhaité, l'unité de gestion 35 donne l'ordre au circuit 37 de réduire l'énergie fournie.

Ce mode de commande pourrait être dangereux si le couple moteur n'était pas modifié dans de fortes descentes. Cela peut se faire manuellement au moyen de la manette 20. Il est également possible de programmer l'unité de gestion 35 pour passer automatiquement en mode à vitesse constante dès qu'une vitesse maximum a été atteinte.

Une action sur la poignée de frein 23 a le même effet que décrit plus haut, soit l'interruption du programme relatif à la commande à couple constant et l'enclenchement du fonctionnement du transducteur en génératrice.

D'autres modes de fonctionnement peuvent être envisagés. Il suffit, à cet effet, de programmer de manière adéquate l'unité de gestion 35 et de prévoir un nombre plus important de positions du levier 19.

Parmi les modes envisageables, on relèvera une alimentation à courant constant, ou encore une alimentation à courant proportionnel à l'effort musculaire. L'un comme l'autre de ces modes peuvent, sans autre, être mis en oeuvre au moyen du dispositif tel que décrit, moyennant la programmation adéquate de l'unité de gestion 35.

Le diagramme de la figure 3 permet de mieux comprendre le comportement d'un véhicule muni d'un dispositif de commande selon l'invention, fonctionnant selon le mode à vitesse constante.

La ligne supérieure du diagramme, identifiée par la lettre A, montre schématiquement le profil d'un parcours susceptible d'être suivi par le véhicule. La deuxième ligne, identifiée par la lettre B, représente la puissance dissipée ou récupérée par le véhicule tout au long du parcours. La ligne C montre la vitesse à laquelle le véhicule se déplace. Enfin, la ligne D représente le couple moteur du véhicule. Pour chacune de ces lignes, le temps est représenté en ordonnée.

Ainsi qu'on peut le voir sur la ligne A, le parcours comporte des plats, des montées et des descentes.

Comme le montre la ligne C, la vitesse est constante tout au long du parcours, conformément au choix effectué par l'utilisateur. On relèvera que cette vitesse pourrait être plus faible dans les fortes pentes, si la puissance disponible était insuffisante.

Pour assurer ce déplacement, le dispositif de commande dispense une quantité d'énergie d'autant plus grande que la pente est forte, ainsi qu'on peut le voir sur la ligne B de la figure 3. Lorsque le véhicule emprunte une descente, il restitue de l'énergie.

La courbe de la ligne D, qui représente le couple, est proportionnelle à la courbe de la ligne B, dès lors que la vitesse est constante.

Dans l'exemple de la figure 3, l'utilisateur ne fournit aucune énergie musculaire. En cas d'apport, la vitesse du véhicule ne serait pas modifiée. Par contre, l'autonomie serait augmentée.

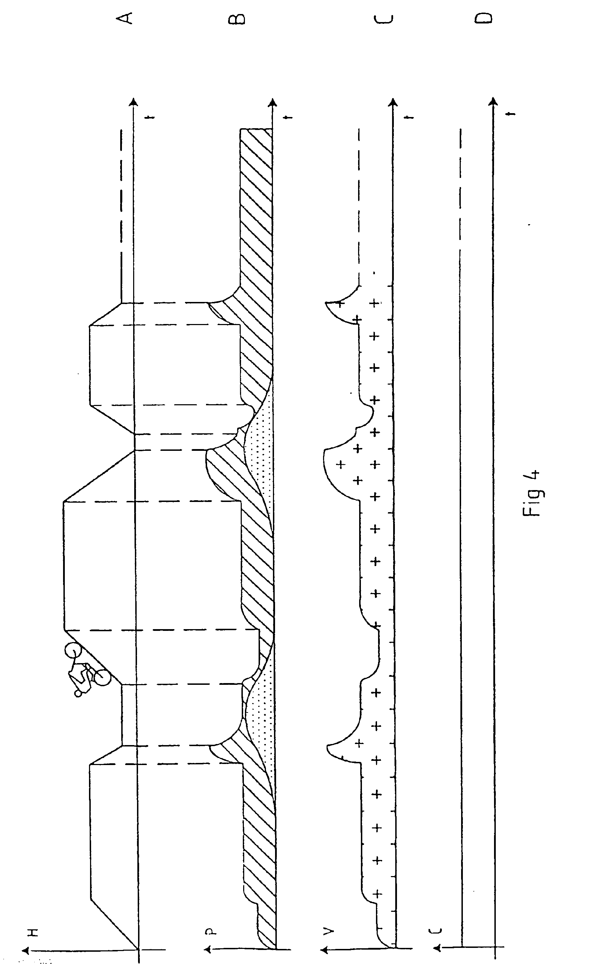

Le diagramme de la figure 4 montre schématiquement le comportement d'un véhicule fonctionnant selon le mode à couple constant. La ligne supérieure A montre, comme pour la figure 3, le profil d'un parcours type, susceptible d'être emprunté par le véhicule. La deuxième ligne, identifiée par la lettre B, représente la puissance dissipée. La vitesse du véhicule correspond à la courbe en regard de la lettre C. La ligne inférieure D représente le couple moteur.

Le profil du parcours emprunté et représenté en A est identique à celui de la figure 3.

Si l'on se réfère à la ligne D, on constate que le couple est constant, conformément au choix fait par l'utilisateur.

La ligne C montre que la vitesse varie de manière sensible selon que le véhicule monte, roule à plat ou descend.

A cause de ces fluctuations de vitesse, la courbe de puissance dissipée diffère considérablement de celle représentée la figure 3. Le couple moteur appliqué au véhicule étant constant quelle que soit la pente de la route, le véhicule consomme en permanence de l'énergie. La puissance dissipée est la même pour une distance quelconque, qu'il s'agisse de plat, de descente ou de montée. En conséquence, plus la vitesse sera grande, plus la puissance dissipée sera élevée. Cela ne porte toutefois pas préjudice à l'autonomie, dès lors que le temps mis pour parcourir une distance donnée diminue avec l'augmentation de la vitesse.

Sur ces tableaux, les échelles n'ont qu'une valeur indicative et relative.

On peut préciser qu'un vélo muni d'un dispositif comme décrit ci-dessus, avec une source d'énergie telle qu'un accumulateur de type Ni-MH de 24V et 20 Ah, dispose d'une autonomie de 70 km environ, à une vitesse constante de 20 kmh, avec un utilisateur de corpulence moyenne, sur un parcours selon normes ECE et sans apport d'énergie musculaire. Si l'apport d'énergie musculaire atteint 50%, l'autonomie est doublée.

En mode à couple constant, l'application d'un couple de 16 Nm permet d'atteindre à plat une vitesse de 20 kmh.

Dans d'autres modes, tels qu'envisagés plus haut, la vitesse du véhicule peut être fonction de l'énergie musculaire fournie par l'utilisateur. C'est, par exemple, le cas dans un mode à courant constant, ou encore à courant proportionnel au couple musculaire.

Le mode de réalisation décrit ci-dessus concerne un vélo. Il est évident que le dispositif objet de la présente invention peut, sans autre, être appliqué à d'autres véhicules, munis d'une source d'énergie électrique. On peut ainsi imaginer un véhicule caréné, avec trois ou quatre roues, ou encore, même, une trottinette.

Les informations affichées au moyen du dispositif 21 n'ont pas été précisées, ne faisant pas directement partie de l'invention. Elles sont sélectionnées de manière à permettre à l'utilisateur de tirer le meilleur profit des ressources disponibles et de connaître le déroulement de son voyage ainsi que les paramètres relatifs au véhicule. On affichera notamment la vitesse, la charge de la source d'énergie, l'autonomie prévisible, etc. Le dispositif d'affichage 21, associé à des moyens de commande non représentés au dessin, doit, en outre, permettre de modifier les paramètres contenus dans l'unité de gestion 35.

Ainsi, en proposant différents modes de commande à l'utilisateur d'un véhicule à source d'énergie électrique, on augmente sensiblement sa souplesse d'utilisation et son attractivité.

## Revendications

1. Dispositif pour la commande d'un véhicule de type comportant:
• au moins deux roues (13, 14),
• un système d'entraînement mécanique (15, 16), pour permettre à l'utilisateur de fournir une énergie musculaire,
• une source d'énergie électrique (17), et
• un transducteur électromécanique (22) relié électriquement à ladite source (17) et mécaniquement à l'une desdites roues (13), ledit transducteur (22) servant à transformer l'énergie mécanique provenant de la roue (13) en énergie électrique alimentant ladite source (17) et l'énergie électrique provenant de la source (17) en énergie mécanique alimentant ladite roue (13),
ledit dispositif comprenant:
• un module de commande (30),
• une électronique de puissance (31) pour assurer la transmission d'énergie entre ladite source (17) et ledit transducteur (22) et commandée par ledit module (30),
• un frein (23, 23a) pour réduire la vitesse du véhicule, et
• une interface homrne-machine (19, 20) reliée audit module (30) et comportant des moyens (20) pour commander la distribution de l'énergie délivrée par la source d'énergie électrique (17) au transducteur (22),
• des capteurs (33, 34); reliés audit module de commande (30) et destinés à mesurer le couple appliqué au véhicule, la vitesse du véhicule, le courant délivré par ladite source d'énergie électrique, et à l'énergie musculaire fournie par l'utilisateur, et
**caractérisé en ce que** ladite interface comporte, en outre, un sélecteur de mode (19) pour choisir l'un ou l'autre mode parmi les modes de commande à couple constant, à vitesse constante, à courant constant et à courant proportionnel à l'effort musculaire fourni, chaque mode définissant la quantité d'énergie transmise entre le transducteur (22) et la source (17), par l'intermédiaire de l'électronique de puissance (31) et à partir des ordres donnés par ledit module (30), respectivement, en fonction du couple appliqué au véhicule, de la vitesse du véhicule, du courant délivré par ladite source d'énergie électrique, et du courant délivré par ladite source d'énergie électrique en combinaison avec l'énergie musculaire fournie par l'utilisateur.

2. Dispositif selon la revendication 1, **caractérisé en ce que** les moyens pour commander la distribution d'énergie sont formés d'une manette (20) et **en ce que** ledit sélecteur consiste en un levier (19) pouvant occuper autant de positions que ledit dispositif comporte de modes de commande.

3. Dispositif selon la revendication 2, **caractérisé en ce que**, dans l'une des positions dudit levier (19), le module (30) est agencé de manière que l'énergie électrique fournie au transducteur (22) assure une vitesse fonction de la position de ladite manette (20), constante pour une position donnée, indépendamment de la configuration du parcours.

4. Dispositif selon la revendication 2, **caractérisé en ce que**, dans l'une des positions dudit levier (19), le module (30) est agencé de manière que le couple appliqué au véhicule par ledit transducteur soit constant pour une position de ladite manette (20).

5. Dispositif selon la revendication 4, **caractérisé en ce que** le module (30) est agencé de manière que l'àpport d'énergie électrique au transducteur (22) soit interrompu lorsque la vitesse mesurée dépasse une valeur limite.

6. Dispositif selon l'une des revendications 1 à 5, **caractérisé en ce que** le frein (23, 23a) comporte un organe d'activation (23) et un frein électrique (23a) activé par ledit organe (23) et relié audit module (30), lequel est agencé de manière à ce qu'il fasse fonctionner le transducteur (22) comme génératrice lorsqu'on active le frein (23).

7. Dispositif selon l'une des revendications 1 à 6, **caractérisé en ce qu'**il comporte en outre un dispositif d'affichage (21) pour indiquer à l'utilisateur les informations relatives au fonctionnement du véhicule et du dispositif de commande.

8. Vélo comportant:
• au moins deux roues (13, 14),
• un système d'entraînement mécanique (15, 16), pour permettre à l'utilisateur de fournir une énergie musculaire,
• une source d'énergie électrique (17), et
• un transducteur électromécanique (22) relié électriquement à ladite source (17) et mécaniquement à l'une desdites roues (13), ledit transducteur (22) servant à transformer l'énergie mécanique provenant de la roue (13) en énergie électrique alimentant ladite source (17) et l'énergie électrique provenant de la source (17) en énergie mécanique alimentant ladite roue (13),
**caractérisé en ce qu'**il comporte, en outre, un dispositif selon l'une des revendications 1 à 7.

## Claims

1. Device for controlling a vehicle of the type comprising:
• at least two wheels (13, 14);
• a mechanical drive system (15, 16) for allowing the user to provide muscular energy;
• an electrical energy source (17); and
• an electromechanical transducer (22) connected electrically to said source (17) and mechanically to one of said wheels (13), said transducer (22) being used to transform the mechanical energy coming from the wheel (13) into electrical energy supplying said source (17) and the electrical energy coming from the source (17) into mechanical energy supplying said wheel (13),
said device comprising:
• a control module (30);
• power electronics (31) for ensuring that energy is transmitted between said source (17) and said transducer (22) and electronics being controlled by said module (30);
• a brake (23, 23a) for reducing the speed of the vehicle;
• a man/machine interface (19, 20) connected to said module (30) and including means (20) for controlling the distribution of energy delivered by the electrical energy source (17) to the transducer (22); and
• sensors (33, 34) connected to said control module (30) and intended to measure the torque applied to the vehicle, the speed of the vehicle, the current delivered by said electrical energy source, and the muscular energy provided by the user, and
**characterized in that** said interface further includes a mode selector (19) for choosing one or other mode from the control modes operating at constant torque, at constant speed, at constant current and at current proportional to the muscular effort provided, each mode defining the quantity of energy transmitted between the transducer (22) and the source (17) via the power electronics (31) and on the basis of the commands given by said module (30) according to the torque applied to the vehicle, to the speed of the vehicle, to the current delivered by said electrical energy source and to the current delivered by said electrical energy source in combination with the muscular energy provided by the user, respectively.

2. Device according to Claim 1, **characterized in that** the means for controlling the energy distribution are formed by a handle (20) and **in that** said selector consists of a lever (19) that can occupy as many positions as said device has control modes.

3. Device according to Claim 2, **characterized in that**, in one of the positions of said lever (19), the module (30) is designed in such a way that the electrical energy delivered to the transducer (22) provides a speed that depends on the position of said handle (20), said speed being constant, for a given position, independently of the travel configuration.

4. Device according to Claim 2, **characterized in that**, in one of the positions of said lever (19), the module (30) is designed so that the torque applied to the vehicle by said transducer is constant for one position of said handle (20).

5. Device according to Claim 4, **characterized in that** the module (30) is designed so that the electrical energy supply to the transducer (22) is interrupted when the measured speed exceeds a limit value.

6. Device according to one of Claims 1 to 5, **characterized in that** the brake (23, 23a) includes an activation member (23) and an electrical brake (23a) activated by said member (23) and connected to said module (30), which is designed so that it makes the transducer (22) operate as a generator when the brake (23) is activated.

7. Device according to one of Claims 1 to 6, **characterized in that** it further includes a display device (21) for indicating to the user the information relating to the operation of the vehicle and of the control device.

8. Cycle comprising:
• at least two wheels (13, 14);
• a mechanical drive system (15, 16) for allowing the user to provide muscular energy;
• an electrical energy source (17); and
• an electromechanical transducer (22) connected electrically to said source (17) and mechanically to one of said wheels (13), said transducer (22) being used to transform the mechanical energy coming from the wheel (13) into electrical energy supplying said source (17) and the electrical energy coming from the source (17) into mechanical energy supplying said wheel (13),
**characterized in that** it further includes a device according to one of Claims 1 to 7.

## Patentansprüche

1. Vorrichtung zur Steuerung eines Fahrzeugs von dem Typ, der aufweist:
• mindestens zwei Räder (13, 14),
• ein mechanisches Antriebssystem (15, 16), um es dem Benutzer zu ermöglichen, eine Muskelenergie zu liefern,
• eine elektrische Energiequelle (17), und
• einen elektromechanischen Wandler (22), der elektrisch mit der Quelle (17) und mechanisch mit einem der Räder (13) verbunden ist, wobei der Wandler (22) dazu dient, die vom Rad (13) kommende mechanische Energie in elektrische Energie umzuwandeln, die die Quelle (17) speist, und die von der Quelle (17) kommende elektrische Energie in mechanische Energie umzuwandeln, die das Rad (13) speist,
wobei die Vorrichtung aufweist:
• einen Steuermodul (30),
• eine Leistungselektronik (31), um die Energieübertragung zwischen der Quelle (17) und dem Wandler (22) zu gewährleisten, und die vom Modul (30) gesteuert wird,
• eine Bremse (23, 23a), um die Geschwindigkeit des Fahrzeugs zu verringern, und
• eine Mensch-Maschine-Schnittstelle (19, 20), die mit dem Modul (30) verbunden ist und Mittel (20) aufweist, um die Verteilung der von der elektrischen Energiequelle (17) gelieferten Energie an den Wandler (22) zu steuern,
• Sensoren (33, 34), die mit dem Steuermodul (30) verbunden und dazu bestimmt sind, das an das Fahrzeug angewendete Drehmoment, die Geschwindigkeit des Fahrzeugs, den von der elektrischen Energiequelle gelieferten Strom und die vom Benutzer gelieferter Muskelenergie zu messen,
**dadurch gekennzeichnet, dass** die Schnittstelle außerdem einen Moduswähler (19) aufweist, um unter den Steuermodi mit konstantem Drehmoment, mit konstanter Geschwindigkeit, mit konstantem Strom und mit zur gelieferten Muskelkraft proportionalem Strom den einen oder anderen Modus auszuwählen, wobei jeder Modus die zwischen dem Wandler (22) und der Quelle (17) übertragene Energiemenge mit Hilfe der Leistungselektronik (31) und ausgehend von den vom Modul (30) in Abhängigkeit vom an das Fahrzeug angewendeten Drehmoment, bzw. von der Geschwindigkeit des Fahrzeugs, bzw. vom von der elektrischen Energiequelle gelieferten Strom, bzw. vom von der elektrischen Energiequelle gelieferten Strom in Kombination mit der vom Benutzer gelieferten Muskelenergie gegebenen Befehlen definiert.

2. Vorrichtung nach Anspruch 1, **dadurch gekennzeichnet, dass** die Mittel zur Steuerung der Energieverteilung von einem Stellknopf (20) gebildet werden, und dass der Wähler aus einem Hebel (19) besteht, der ebenso viele Positionen einnehmen kann wie die Vorrichtung Steuermodi aufweist.

3. Vorrichtung nach Anspruch 2, **dadurch gekennzeichnet, dass** in einer der Positionen des Hebels (19) der Modul (30) so ausgelegt ist, dass die an den Wandler (22) gelieferte elektrische Energie eine von der Position des Stellknopfs (20) abhängige Geschwindigkeit gewährleistet, die unabhängig von der Konfiguration der Strecke für eine gegebene Position konstant ist.

4. Vorrichtung nach Anspruch 2, **dadurch gekennzeichnet, dass** in einer der Positionen des Hebels (19) der Modul (30) so ausgelegt ist, dass das vom Wandler an das Fahrzeug angewendete Drehmoment für eine Position des Stellknopfs (20) konstant ist.

5. Vorrichtung nach Anspruch 4, **dadurch gekennzeichnet, dass** der Modul (30) so ausgelegt ist, dass die Zufuhr elektrischer Energie zum Wandler (22) unterbrochen wird, wenn die gemessene Geschwindigkeit einen Grenzwert überschreitet.

6. Vorrichtung nach einem der Ansprüche 1 bis 5, **dadurch gekennzeichnet, dass** die Bremse (23, 23a) ein Aktivierungsorgan (23) und eine elektrische Bremse (23a) aufweist, die vom Organ (23) betätigt wird und mit dem Modul (30) verbunden ist, wobei der Modul (30) so ausgelegt ist, dass er den Wandler (22) als Generator arbeiten lässt, wenn die Bremse (23) aktiviert wird.

7. Vorrichtung nach einem der Ansprüche 1 bis 6, **dadurch gekennzeichnet, dass** sie außerdem eine Anzeigevorrichtung (21) aufweist, um dem Benutzer Informationen bezüglich des Betriebs des Fahrzeugs und der Steuervorrichtung anzuzeigen.

8. Fahrrad, das aufweist:
• mindestens zwei Räder (13, 14),
• ein mechanisches Antriebssystem (15, 16), um es dem Benutzer zu ermöglichen, eine Muskelenergie zu liefern,
• eine elektrische Energiequelle (17), und
• einen elektromechanischen Wandler (22), der elektrisch mit der Quelle (17) und mechanisch mit einem der Räder (13) verbunden ist, wobei der Wandler (22) dazu dient, die vom Rad (13) kommende mechanische Energie in elektrische Energie umzuwandeln, die die Quelle (17) speist, und die von der Quelle (17) kommende elektrische Energie in mechanische Energie umzuwandeln, die das Rad (13) speist,
**dadurch gekennzeichnet, dass** es außerdem eine Vorrichtung nach einem der Ansprüche 1 bis 7 aufweist.
